# EUROPÄISCHE PATENTANMELDUNG

(11) **EP 1 502 818 A1**
(43) Veröffentlichungstag der Anmeldung: **02.02.2005**
(21) Anmeldenummer: 04017640.6
(22) Anmeldetag: 26.07.2004
(51) Int. Cl.: B60R 9/10

(54) **Fahrradhalter**

(30) Priorität: 30.07.2003 DE 10334726
(71) Anmelder: SportRack GmbH, 69207 Sandhausen (DE)
(72) Erfinder: Krebeck, Elmar, 69120 Heidelberg (DE); Runte, Michael, 69115 Heidelberg (DE)
(74) Vertreter: Bernhardt, Reinold, Dr. Dipl.Phys.

(57) **Zusammenfassung**

Die Erfindung betrifft einen Fahrradhalter zur Montage auf einem Dachlastenträger eines Fahrzeugs mit einer an dem Dachlastenträger (1,2) anbringbaren Halteschiene (3) für die Aufnahme eines darauf aufrechtstehenden Fahrrades (18) und mit einem am Fahrrad oberhalb der Halteschiene (3) angreifenden Halteelement (6). Gemäß der Erfindung lässt sich das Halteelement bei Nichtgebrauch des Fahrradhalters in eine zur Längsachse der Halteschiene parallele Lage verschwenken. Vorzugsweise weist die Halteschiene eine Ausnehmung (15) auf, in die hinein sich das Halteelement einschwenken lässt, wobei insbesondere die Oberfläche des in die Ausnehmung eingeschwenkten Halteelements bündig zur angrenzenden Oberfläche der Halteschiene ist.

## Beschreibung

Die Erfindung betrifft einen Fahrradhalter zur Montage auf einem Dachlastenträger eines Fahrzeugs, mit einer an dem Dachlastenträger anbringbaren Halteschiene für die Aufnahme eines darauf aufrecht stehenden Fahrrades und mit einem am Fahrrad oberhalb der Halteschiene angreifenden Halteelement.

In vielfältiger Form verwendete Fahrradhalter solcher Art werden üblicherweise vom Dachlastenträger entfernt, wenn längerfristig keine Benutzung vorgesehen ist.

Der vorliegenden Erfindung liegt die Aufgabe zugrunde, einen neuen Fahrradhalter der eingangs erwähnten Art zu schaffen, der weniger Anlass zu einer solchen Demontage bietet.

Der diese Aufgabe lösende Fahrradhalter nach der Erfindung ist dadurch gekennzeichnet, dass das Halteelement bei Nichtgebrauch des Fahrradhalters in eine zur Längsachse der Halteschiene parallele Lage verschwenkbar ist.

Gemäß der Erfindung lässt sich das vorzugsweise verschwenkbar mit der Halteschiene verbundene Halteelement aus seiner Gebrauchsposition, in der es von der Halteschiene schräg nach oben vorsteht, in eine weniger Luftwiderstand und Windgeräusche verursachende Position parallel zur Halteschiene verschwenken. So kann der Fahrradhalter bei Nichtbenutzung auf dem Dachlastenträger verbleiben. Der Demontageaufwand entfällt.

Vorzugsweise ist die Außenfläche des in die Ausnehmung eingeschwenkten Halteelements bündig zur angrenzenden Oberfläche der Halteschiene.

Während es denkbar ist, die Halteschiene über ihre gesamte Länge starr auszubilden, weist sie in einer bevorzugten Ausführungsform der Erfindung wenigstens einen Endteil auf, der mit einer Rille für die Aufnahme eines Rades des Fahrrads versehen ist und der sich bei Nichtgebrauch des Fahrradhalters um 180° ebenfalls in eine zur Längsachse der Halteschiene parallele Lage verschwenken lässt.

Vorzugsweise ist auch für den Endteil die Möglichkeit gegeben, ihn in eine weitere, an der Halteschiene gebildete Ausnehmung einzuschwenken, wobei vorzugsweise auch die Außenfläche des in die weitere Ausnehmung ausgeschwenkten Endteils bündig zur angrenzenden Oberfläche der Halteschiene ist.

Die weitere Ausnehmung kann durch eine Längsrille in der Halteschiene gebildet sein, welche zu dem betreffenden Endteil hin geöffnet ist. In einer besonders bevorzugten Ausführungsform der Erfindung ist eine solche weitere Ausnehmung wenigstens teilweise durch eine zu dem Endteil hin offene Ausnehmung in dem Halteelement gebildet, d.h., das eingeschwenkte Endteil greift ggf. sowohl in die Ausnehmung in dem Halteelement als auch in die in diesem Bereich abgeflachte Längsrille ein.

So kann die Halteschiene im eingeschwenkten Zustand des Halteelements und ggf. des wenigstens einen Endteils einen länglichen Körper bilden, dessen Oberfläche von Absätzen und Vorsprüngen frei ist.

Eine besonders stromlinienförmige Form des länglichen Körpers wird erreicht, wenn er am in Fahrtrichtung vorderen Ende und ggf. auch hinteren Ende gerundet ist.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: einen Fahrradhalter nach der Erfindung im Benutzungszustand,
- Fig. 2: den Fahrradhalter von Fig. 1 in einem zusammengelegten, unbenutzten Zustand.

An zueinander parallel im Abstand angeordneten Querträgern 1 und 2 eines im übrigen nicht gezeigten Dachlastenträgers ist eine Halteschiene 3 für ein Fahrrad angebracht. Zur Anbringung der Halteschiene an den Querträgern verwendete Befestigungsmittel sind unterhalb der Halteschiene angeordnet und in den Figuren nicht sichtbar.

Die weitgehend aus Kunststoff gefertigte, mit Quermulden 4 und 5 auf den Querträgern 1 und 2 aufliegende Halteschiene 3 ist über ein Gelenk 20 mit einem Halteelement 6 verbunden, welches an einem Rahmenschenkel 18 eines auf der Halteschiene 3 aufrecht stehenden Fahrrades angreift.

Die Halteschiene 3 weist einen länglichen Mittelteil 7 auf, dessen Enden über ein Gelenk 21 bzw. 22 mit Endteilen 8 und 9 verbunden sind. Eine Längsrille 10 bzw. 11 in den Endteilen dient jeweils der Aufnahme eines der Räder des Fahrrades, das sich in der betreffenden Längsrille jeweils durch eine die Radfelge übergreifende Lasche 12 bzw. 13 festhalten lässt. An den freien Enden der Längsrillen ist jeweils eine etwa an die Form des Rades angepasste Rampe 30 gebildet.

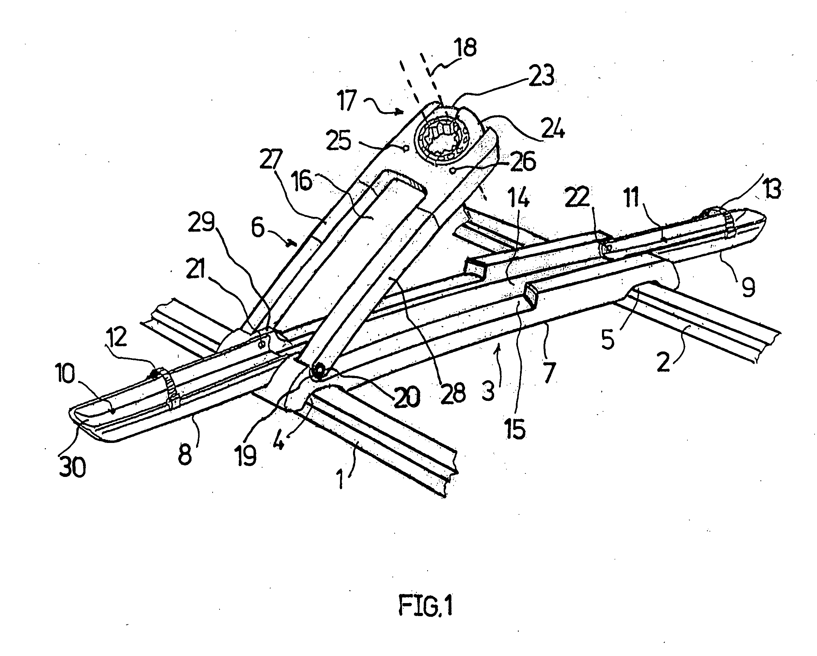

Wie Fig. 1 erkennen lässt, erstreckt sich über die gesamte Länge des Mittelteils 7 der Halteschiene 1 eine Rille 14 mit unterschiedlich tiefen Abschnitten, wobei die Breite etwa gleich der Breite der Endteile 9 und 10 ist. Neben der Längsrille 14 weist der Mittelteil 7 eine weitere, sich über einen Teil seiner Länge erstreckende Ausnehmung 15 auf, deren Tiefe etwa gleich der Höhe des Halteelements 6 ist.

Das Halteelement 6 selbst ist mit einer sich über einen Teil seiner Länge symmetrisch zu einer Längsmittellinie erstreckenden, zum Endteil 8 hin offenen Ausnehmung 16 versehen, deren Breite etwa gleich der Breite des Endteils 8 ist.

Ein Greifelement 17 am freien Ende des Halteelements 6, das den obengenannten, zur Vertikalen schräg verlaufenden Schenkel 18 des Fahrradrahmes umfasst, weist Backen 23 und 24 auf, die in der Art einer Zange an dem Rahmenschenkel 18 angreifen. Die in einer Ausnehmung im Halteelement 6 geführten Backen 23 und 24 lassen sich, um eine Öffnung zur seitlichen Einführung des Rahmenschenkels 18 zu bilden, gegen die Kraft (nicht gezeigter) Federn um Drehachsen 25 und 26 verschwenken.

Durch die Ausnehmung 16 des Halteelements gebildete, am freien Ende gerundete Gabelschenkel 27 und 28 greifen am Gelenk 20 jeweils in eine Eckenausnehmung 19 am Mittelteil 7 ein. Die Eckenausnehmung 19 ist jeweils ein Steg 29 begrenzt, welcher den Gelenkachsenstift sowohl des Gelenks 20 als auch des Gelenks 21 aufnimmt.

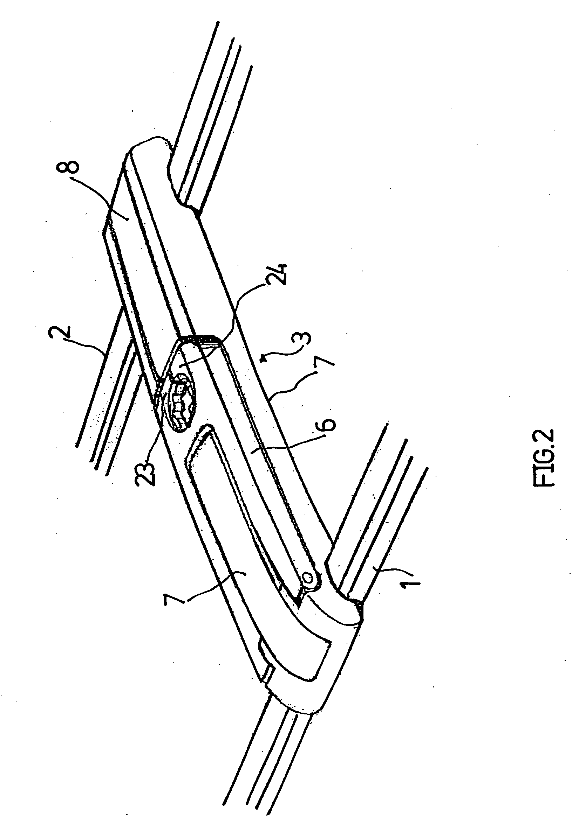

Wie Fig. 2 zeigt, lässt sich der auf dem Dachlastenträger montierte Fahrradhalter bei Nichtgebrauch zusammenlegen, wozu das Halteelement 6 und die Endteile 7 und 8, letztere um 180°, verschwenkt werden. Anstelle verschwenkbarer Endteile könnten auch in Längsrichtung der Halteschiene 3 verschiebbare Endteile vorgesehen sein.

Im zusammengelegten Zustand füllen das Halteelement 6 die Ausnehmung 15 im Mittelteil 7 und der Endteil 8 einen Teil der Rille 14 sowie die Ausnehmung 16 im Halteelement 6 aus. Der Endteil 9 greift in einen weiteren Teil der Rille 14 ein.

Die betreffenden Oberflächen von Halteelement 6 und Endteilen 8,9 sind jeweils bündig zur angrenzenden Oberfläche des Mittelteils 7.

Durch Rundungen an dessen Enden ist im zusammengelegten Zustand des Fahrradhalters ein stromlinienförmiger Körper mit geringem Luftwiderstand gebildet, dessen Oberfläche frei von Windgeräusche erzeugenden Vorsprüngen und Absätzen ist.

Gegenüber herkömmlichen Fahrradhaltern ist der Luftwiderstand bei Nichtbenutzung deutlich geringer. Durch seine Kompaktheit im zusammengelegten Zustand erfordert der Fahrradhalter auf dem Fahrzeugdach oder bei Lagerung, z.B. in einer Garage, nur wenig Stauraum.

## Patentansprüche

1. Fahrradhalter zur Montage auf einem Dachlastenträger eines Fahrzeugs, mit einer an dem Dachlastenträger (1,2) anbringbaren Halteschiene (3) für die Aufnahme eines darauf aufrechtstehenden Fahrrades (18) und mit einem am Fahrrad oberhalb der Halteschiene (3) angreifenden Halteelement (6),
**dadurch gekennzeichnet,**
**dass** das Halteelement (6) bei Nichtgebrauch des Fahrradhalters in eine zur Längsachse der Halteschiene (3) parallele Lage verschwenkbar ist.

2. Fahrradhalter nach Anspruch 1,
**dadurch gekennzeichnet,**
**dass** das Halteelement (6) verschwenkbar mit der Halteschiene (3) verbunden ist.

3. Fahrradhalter nach Anspruch 1 oder 2,
**dadurch gekennzeichnet,**
**dass** die Halteschiene (3) eine Ausnehmung (15) aufweist, in die hinein sich das Halteelement (6) einschwenken lässt.

4. Fahrradhalter nach Anspruch 3,
**dadurch gekennzeichnet,**
**dass** die Außenfläche des in die Ausnehmung (15) hinein eingeschwenkten Halteelements (6) bündig zur angrenzenden Oberfläche der Halteschiene ist.

5. Fahrradhalter nach einem der Ansprüche 1 bis 4,
**dadurch gekennzeichnet,**
**dass** die Halteschiene (3) wenigstens einen Endteil (8,9) aufweist, der mit einer Rille (10, 11) für die Aufnahme eines Rades des Fahrrades versehen ist und der sich bei Nichtgebrauch des Fahrrades unter Verkürzung der Halteschiene in eine zur Längsachse der Halteschiene parallele Lage verschwenken oder verschieben lässt.

6. Fahrradhalter nach Anspruch 5,
**dadurch gekennzeichnet,**
**dass** die Halteschiene (3) eine weitere Ausnehmung (14,16) aufweist, in die hinein sich der Endteil (8,9) verschwenken oder verschieben lässt.

7. Fahrradhalter nach Anspruch 6,
**dadurch gekennzeichnet,**
**dass** die Außenfläche des in die weitere Ausnehmung (14,16) eingeschwenkten oder eingeschobenen Endteils bündig zur angrenzenden Oberfläche der Halteschiene (3) ist.

8. Fahrradhalter nach Anspruch 7,
**dadurch gekennzeichnet,**
**dass** die weitere Ausnehmung (16) durch eine Längsrille (14) in der Halteschiene (3) gebildet ist.

9. Fahrradhalter nach Anspruch 7 oder 8,
**dadurch gekennzeichnet,**
**dass** die weitere Ausnehmung (14,16) wenigstens teilweise durch eine Ausnehmung (16) in dem Halteelement (6) gebildet ist.

10. Fahrradhalter nach einem der Ansprüche 1 bis 9,
**dadurch gekennzeichnet,**
**dass** die Halteschiene (3) im eingeschwenkten Zustand des Halteelements (6) und ggf. des wenigstens einen Endteils (8,9) einen länglichen Körper mit einer von Absätzen und Vorsprüngen freien Oberfläche bildet.

11. Fahrradhalter nach Anspruch 10,
**dadurch gekennzeichnet,**
**dass** der längliche Körper am in Fahrtrichtung des Fahrzeugs vorderen Ende und ggf. hinteren Ende gerundet ist.
